# EUROPEAN PATENT APPLICATION

(11) **EP 4 458 784 A1**
(43) Date of publication of application: **06.11.2024**
(21) Application number: 23171118.5
(22) Date of filing: 02.05.2023
(51) Int. Cl.: C03C 17/00, C03C 17/30, B05B 13/06, B05D 7/22

(54) **METHOD FOR COATING A CYLINDRICAL GLASS CONTAINER AND COATED GLASS CONTAINER**

(71) Applicant: SCHOTT AG, 55122 Mainz (DE); SCHOTT Pharma Schweiz AG, 9000 St. Gallen (CH)
(72) Inventor: HAHN, Christian, 9000 St.Gallen (CH); BREVEGLIERI, Francesca, 9000 St.Gallen (CH); RUDAS, Gerd, 55122 Mainz (DE); BRACK, Heike, 55122 Mainz (DE); DRISCH, Michael, 55122 Mainz (DE); BREUNIG, Sonja Mareike, 55122 Mainz (DE); STUCKENHOLZ, Stefanie, 55122 Mainz (DE); GLÄSSER, Vanessa, 55122 Mainz (DE)
(74) Representative: Schott Corporate IP

(57) **Abstract**

Method for coating the inside of a glass cylinder with providing a glass cylinder, inserting a spray nozzle into the glass cylinder, praying a silicone solution on the inside of the glass cylinder while moving the nozzle along the longitudinal axis of the cylinder. The resulting inner surface coating is an optically defect free silicone layer.

## Description

The invention relates to a method for internally coating a cylindrical glass container with a silicone coating and an internally coated glass cylinder.

In the pharmaceutical industry, coating the inside of a container (like a syringe or cartridge) with a silicone layer is well known to improve gliding performance when a plunger stopper is inserted and moved to expel a liquid. This is used for instance for a cartridge or syringe containing a medical substance.

The known coated containers have the disadvantage that the applied silicone layer have inconsistencies that are visible with the naked eye. They appear to the naked eye as droplets, haze, cloudy structure or similar, more general one may describe them as imperfections in terms of homogeneity of the silicone containing coating, sometimes designated as orange peel. These inconsistencies occur in and/or on the silicone layer as it has been verified by ToF-SIMS analyses. They are typically not impeding the functionality of the plunger system but are perceived by end users as defects in the product, and therefore undesirable. In some circumstances, products with visible orange peel need to be rejected for use, creating considerable waste. In some cases of severe imperfections, the observation of the content (for instance with the naked eye or optical camera systems) is impaired. Optically visible defects also make automated visual inspection more difficult. It is an object of the invention to provide for a method to internally coat a glass cylinder with a silicone coating that appears to naked eye to be devoid of visual distractions, while maintaining full functionality. The invention further relates to a glass cylinder coated according to the invention. The invention also relates to a glass cylinder with a silicone coating devoid of visual distractions that has been sterilized.

The problem is solved with the method according to claim 1.

By applying the silicone layer to the inside of the glass cylinder according to the invention, a homogeneous internal silicone layer is achieved that is free from optical defects, even after sterilization, in particular steam sterilization.

### Description

The glass container to be coated according to the invention can be of any type. In particular good results can be achieved with cylindrical containers like ampoules, vials, cartridges, or syringes. In particular good results are achieved with cartridges and syringes, which are cylindrical glass containers for use with a stopper system to discharge contained liquids like medicinal solutions. The invention can be implemented using any type of glass. In particular, pharmaceutical glass can be used, like boron silicate types. This type of glass complies with the requirements of a specific pharmacopoeia, e.g. EP (European Pharmacopoeia), USP (United States Pharmacopoeia) and JP (Japanese Pharmacopoeia). The invention can be implemented with cylindrical containers that are either closed at one end, for example vials, as well as containers that are open on both ends like syringes or cartridges.

Depending on the condition of the inner surface of the provided glass container before treatment, a cleaning step can be beneficial before applying a coating layer If the inner glass surface has contamination on its surface, which could impede adhesion of a coating layer, it is preferred that this contamination is removed by an appropriate cleaning process. Any cleaning process that removes the contamination is suitable.

For medical end use of the coated container, the cleaning step can for example be performed by washing with water, preferably WFI (water for injection) that is a standard water quality for medical purposes. This can for example be performed by rinsing with WFI, in one or more subsequent steps. Washing processes like this are known in the art.

According to the invention, a silicone layer is applied to the inner surface of the container by way of spraying. A nozzle lance with an atomizer is inserted into the container to be coated. Under axial movement of the nozzle, the atomizer discharges a water mixture containing silicone to cover the inner surface.

After applying the coating on the inner surface, further processing steps are possible. For instance, with a drying step wherein, the coating is dried to improve the stability of the silicone layer. This can be performed by a baking step, where the coated container is subjected to heat. This removes remaining carrier material, like water and can induce further crosslinking of the silicone layer as well as improved adherence to the glass inner surface. In addition, a sterilization step can be performed, for example if a pharmaceutical end use is intended. In particular known sterilization processes can be performed as these processes do not result in detectable imperfections on the silicone surface. A water-based sterilization process is advantageous as this maintains the quality of the coating to a high degree. Otherwise, other sterilization processes can also be used according to the invention.

After the coating and optional drying and/or sterilization steps, the container can be filled with a liquid (for example a medicinal liquid) and closed off with suitable means depending on the type of container, for example with a stopper and cap. Further effects will be scribed according to examples of implementations according to the invention, under reference to the figures.
Fig. 1 shows a schematic view of an implementation of the invention,
Fig. 2 shows an example of a coated container,
Fig. 3 shows an example of a coating lance,
Fig. 4 shows a diagram of coating lance movement, and
Fig. 5 shows multiple process steps of a coating method.

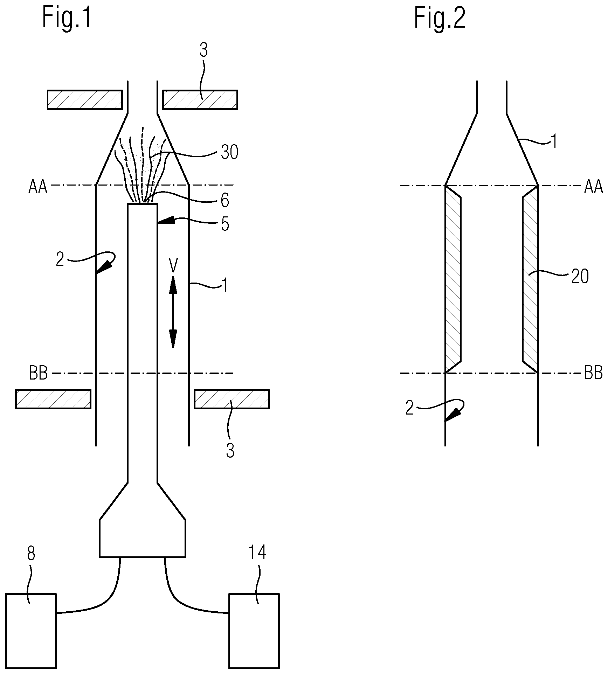

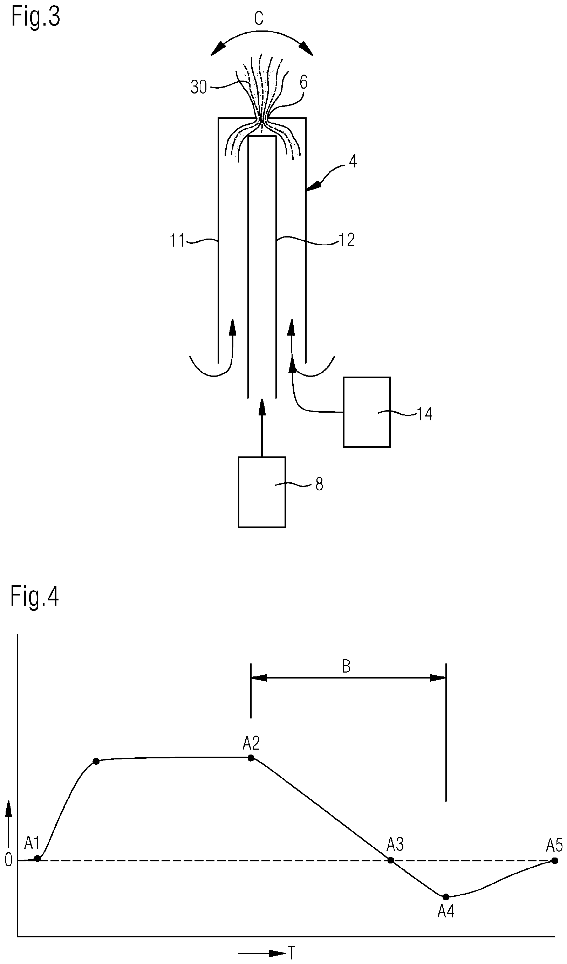

Figure 1 shows an example of an embodiment of the invention. A coating apparatus 3 is holding a glass container, in this case embodied by a glass syringe 1. The invention is not limited to this embodiment, and be used with any glass cylinder, in particular ampoules and vials. Both glass cylinders that are open at both ends and closed on one end can be used according to the invention. In case where a closed cylinder is used, the closed end will be placed at the top. The syringe 1 is positioned in a vertical upright position, with the distal end pointing upwards. The glass syringe 1 has an inner surface 2. The coating apparatus 3 per se is known in the art. The coating apparatus 3 is provided with a coating lance 4, that can be moved coaxially in and out of the inside of the syringe 1, indicated with V. The coating apparatus 3 is provided with means for moving the lance 4, such means are known in the art. The speed with which the lance 4 is moved can be adjusted. The distal end 5 of the lance 4 has an outlet 6 (in this case a central opening), which in this example is a nozzle. In fig. 3 an example of the lance 4 is shown. The lance 4 comprises an outer tube 11, in which an inner tube 12 is placed coaxially. The outer tube 11 is connected to an air supply 14 that provides compressed dry air (preferably sterile air) to the outer tube 11. The inner tube 12 is connected to an emulsion supply device 8, which provides a stream of pressured silicone emulsion to the inner tube 12. The inner tube 12 has an opening at the top that is positioned slightly below the distal end of the outer tube 11. The outer tube 6 has an opening at the distal end. By providing compressed air and emulsion at the same time to the outer and inner tubes 11,12 respectively, the emulsion and air are mixed within the lance 4. The emulsion air mixture atomizes and is expelled the outlet 6 forming a mist 30 (comprising air and silicone particles) in a cone shaped pattern. The lance 4 can be implemented in other ways, in particular any lance that is provided with a spray nozzle at it distal end can be used, whereby the length of the lance should be such that the spray nozzle can travel inside the syringe to be coated to a desired top position.

By adjusting the supply air pressure provided by the air supply 14 and coating liquid flow rate provided by the emulsion supply unit 8, the resulting spray mist can be adjusted.

The pressure of the compressed air is typically in the range of 0.3 - 0.8 bar, in particular 0.5 bar yields good results. The pressure indicated here is the overpressure with respect to the ambient pressure. The outlet 6 or nozzle outlet has preferably a diameter of between 0.1 and 0.5 mm, although other diameters can be used. For smaller cylinders to be coated (for example with an internal diameter between 6-12 mm) the lance 4 can have an outer diameter of 3mm. For larger cylinders to be coated (for example with an internal diameter of between 12 and 24 mm), the lance can have an outer diameter of 7mm. The smaller outlets (0.1 - 0.3mm) are more effective for coating smaller cylinders, whereas the larger outlets (0.3-0.5mm) are more effective for coating larger cylinders.

The coating apparatus 3 can move the lance 4, for example with speeds between 85 and 300 mm/s. Other speeds can also be used. For larger cylinders a lower speed (like 85-150 mm/s) is more effective, whereas for smaller cylinders higher speeds (like 150-400 mm/s) are more effective.

The nozzle can be implemented with different spray patterns. In particular a cone shaped spray pattern is effective in coating the internal surface of the cylinder to be coated. For cylinders with a smaller diameter, narrower spray cones are advantageous as they cover the walls more efficiently. Conversely, broader spray cones are more efficiently in covering larger diameter cylinders. In particular, spray cone angles of 10-90 degrees, preferably 20-70 degrees, more preferably 30-40 degrees (shown as C in fig. 3) are efficient.

Although a cone shaped spray pattern is preferable, the invention can also be implemented using other types of spray pattern, like for example a radial spray pattern.

For the silicone solution, a solution containing silicone is used, or example DC 366, an emulsion of polydimethylsiloxane (PDMS) and a solvent like water (for example WFI). The invention is not limited to this type of dimethylpolysiloxane or dimethicone, but other polymeric organosilicone compounds (commonly referred to as silicones) can be used. In particular, silicones with a crosslinking functional H-group could be considered. Preferably, the silicone used is compatible with medical use.

The silicone solution according to the invention contains around 1-8% silicone (weight percentage) and water. The dilution and resulting emulsion in the range of 2-6.5% silicone has improved properties for controlling the layer thickness being sprayed, with a range of 2.5 to 3.5% showing better results. In particular a dilution between 2.6-3.0% has good results, as the resulting emulsion provides good control of the layer thickness.

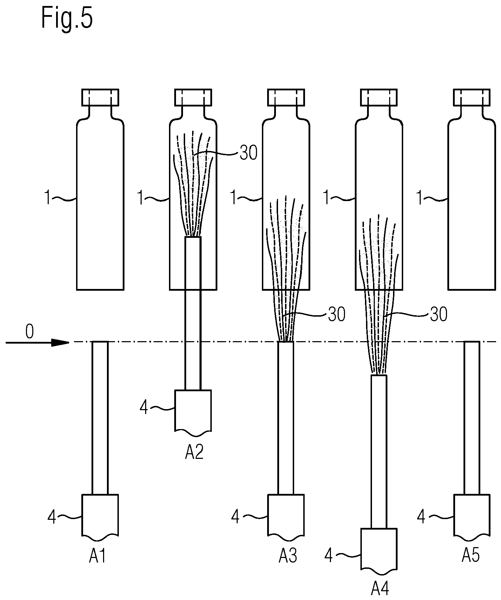

An example of a coating procedure according to the invention is described with reference to figs. 4 and 5.

To coat a glass cylinder according to the invention, it is preferable that the glass cylinder is first cleaned. In the pretreatment or washing step according to the invention, unwanted surface contamination of the inner surface of the glass container is removed. By removing unwanted substances, a subsequently applied coating layer will adhere better or form a better bond with the glass surface. In case the resulting cylinder is used in pharmaceutical applications, the cleaning step also removes substances that are unwanted for medical application. If a liquid or fluid is used for the pretreatment, a drying step can be used after washing to remove any unwanted liquid that could interfere with the adherence of the following coating layer. For instance, the washing step can be carried out by washing with WFI (water for injection), with one or more subsequent applications of WFI to the inside of the syringe. After washing, a drying step to dry the inner surface is preferred. If the inner surface of the element to be coated is already sufficiently clean, the pretreatment step can be left out.

For a coating procedure, the distal end 5 of the lance 4 is moved from a starting position O (located outside the syringe 1, position A1 in fig. 5) into the syringe 1 towards the upper section AA of the syringe 1. The lance 4 is then positioned in a starting position (position A2 in fig. 5). This starting position is so that the emulsion to be sprayed reaches the upper-level AA of the coating layer to be applied, which depend on the spraying pattern used. At the other end, the position BB indicates where the coating needs to end. In fig. 2, the coating to be applied is shown between the start position AA and the end position BB.

In fig. 4 the movement of the nozzle is described. On the Y axis the position of the top of the nozzle of the lance 4 is shown, whereas on the X axis the timing T of the process is shown. The markings A1-A5 denote stages of the movement of the lance 4, with A1 the starting position. From the starting position the nozzle is moved upwards into the cylinder. After the nozzle reaches the topmost position at point A2, the flow of the emulsion is started by using the pomp system 14. This starts the spraying of the emulsion with the cone shaped pattern. The spray action is started by switching on the air supply unit 14 and the emulsion supply unit 8 at the same time. From the start, the upper-level AA of the inner wall 2 is being covered with the spray solution. The duration of the spraying of the emulsion (the line B shows that the emulsion is being sprayed) is shown as B in Fig. 4. From A2 the nozzle is moved downwards, continuing spraying the inside 2 of the syringe 1, passing through the initial starting height position at point A3, while continuing down to the end position A4. Reaching the end position A4, the spray action is stopped, and the nozzle is moved back to the initial position A5. At the moment the spray action is stopped (by switching off both the air supply unit 14 and the emulsion supply unit 8 at the same time), the lower-level BB of the intended coating position has been sprayed. At this point the coating step is completed, having deposited a coating at least over the inner surface area 2 between the upper- and lower-level AA, BB and the coated cylinder can be moved on to a further processing step. In fig. 5 the position of the lance 4 for each of the points A1-A5 is shown.

Depending on the nozzle spray pattern, in particular with radially spraying nozzle types, the nozzle end of the lance 4 can be still positioned within the syringe at the lower-level position BB.

In Fig. 2 the coated cylinder with the internal coating layer 20 is shown.

The coating is preferably performed while moving outwards as shown in the example above. In another variant according to the invention, the emulsion spray is activated while moving the lance 4 from the lower position to the top end position. In this case, the coating layer is applied from the lower-level BB towards the upper-level AA.

Preferably, the nozzle is centered within the cylinder as to prevent the nozzle touching the inner surface of the cylinder and further improving the consistency of the coating layer being applied.

The applied layer thickness is preferably mostly constant along the axial direction of the cylinder. The layer thickness can be between 20 and 160 nm. A layer thickness of 40 nm and 80 nm has proven to be effective. In particular, a layer thickness of 60 nm (+/- 20 nm) has proven to be effective.

In another example of an implementation of the invention, the layer thickness can be varied along the axial direction (for example between 40 nm and 80 nm).

This sectional silicone coating that varies in thickness along the axial axis of the cylinder can for example be applied to reduce the free silicone oil while maintaining good gliding performances. Therefore, the layer thickness in the area where later the plunger stopper can be set is higher (for example 10nm) than the rest. This can for instance be achieved by varying the speed of the nozzle during application or changing the rate of flow accordingly.

The invention can be implemented by coating the full inside wall of the cylinder, or only partial. The distal closed end of the cylinder does not need to be coated.

It is advantageous to have the inner wall of the cylinder coated in the section where later a stopper will engage with the inner surface. This improves the gliding properties of the container wall / stopper system.

The invention can be used with cylinders that are open at the top, like for instance syringes and cartridges, where the sprayed solution can vent out of the open top. Cylinders that are closed at the top can also equally be treated.

After applying the coating, the coated cylinder can be dried using methods known in the art, for example air drying or (heat) curing.

According to the invention, the cylinder to be coated can be washed using any known suitable method before applying the coating layer. Also, the coated cylinder can be sterilized after the application of the coating layer. This option is beneficial for coated cylinders that will be filled later with medical liquid content. The invention also relates to a coated cylinder that is sterilized. The sterilized coated cylinder can be packed in (as such know) sterile packaging for storage and transport to a fill facility. This has the benefit that the filling operation is simplified by removing the need for sterilization before filling.

The sterilization step can be performed using any suitable known method, preferably according to the level of a known (pharmaceutical) standard. Good results were achieved with known water sterilization. The optical defect pattern is largely uninfluenced by water-based sterilization methods.

Following the method according to the invention, the coated cylinder does not show when observed with the naked eye any optical defects in the coating layer, unlike the prior art that shows defects like bubbles, droplets, orange peel and streaks, etc. Optical defects in the coating layer are formed by small local inconsistencies in layer thickness, like dips or bumps in the layer. Here the local thickness varies so from the average thickness so as to generate optical distortions. This is visible with external light, for example a lamp or ambient light or with through lightening, where a light source is place behind the container. With the internal silicone layer as applied according to the method of the invention, the visual appearance of the coated container from the outside is of a homogeneous appearance, without defects, or at least very few defects. Note that the inspection can be carried out with or without a liquid contained in the coated cylinder. The inspection is carried out after coating but can be done before a subsequent sterilization step.

With the human eye, objects smaller than 0.02 mm are not distinguishable. Detection and inspection by means of direct visual inspection. For visual inspection, a light source, like a light box, is preferably at least partially covered with a light tight cover, to provide a contrasting effect. For example, the light box can be provided with one or more light blocking stripes. The light can be for example D65 (daylight) or TL 84 (stores light). To inspect a cylinder coated according to the invention, the cylinder is positioned close (1-5 cm for example) to the light source and moved past the light source. During this movement potential defects are clearly visible in the interface between a light and dark area. The eyes of the observer are located around 30 cm from the vial. This can for example be achieved with holding the cylinder to be observed by hand close to the light source. The light source must be located exactly behind the cartridge and allow the observer to shine through the cartridge. The light/dark contrast provided by the light box is in the background. Preferably the light source is larger than the cylinder to be inspected for ease of observation, although smaller sized light sources are also usable.

With the coated cylinder at around 30 cm distance, moving the cylinder in front of the light source and the light and dark areas, defects with a size larger than around 50 µm can be detected. Defects that are smaller than 50 µm are not visible, in particular defects smaller than 20-30 µm are not visible.

The direct visual inspection method is very efficient in detecting defects and detects smaller defects than would typically be observed in coated cylinder in practical use, like for example when being handled by end users.

According to the invention, optical defects in the silicone layer are smaller than 125 µm, preferably smaller than 100 µm, preferably smaller than 50 µm and preferably smaller than 30 µm. The size is determined by the longest line that can be drawn through the defect in case the defect is not essentially round, otherwise the length is determined by the diameter of the essentially circular defect.

When applying a silicone layer according to the invention, the optical defects that remain, if any, are smaller than listed above. Such defects can nevertheless be detected with optical inspection methods. With such methods, the distribution of the below threshold defects along the inner surface can be determined.

In addition to or as alternative to the above-described naked eye visual inspection, the inspection can also be carried out with an optical measurement system, like for example one disclosed in US patent US 9327079. One method suitable for detecting optical defects in the silicone coating is using through lighting. In this method a light source is placed behind the coated cylinder to be measured, and the light coming through is detected. Defects in the coating show up as lighter or darker sections within the homogeneous surrounding coating. Due to the different thickness and/or surface properties of the defects, the light passing through is deflected differently from the light passing through the surrounding area. The light that has been passed through the cylinder can be observed, for instance by recording an image with a recording device like a digital camera. With the light passing through the lens of the camera, an image of the lighted through area is recorded. The resulting image will contain the light and dark sections formed by any defect present in the silicone layer. The recorded image contains the topographical information needed to evaluate the position and size of the defects. The location of the defects can be established using the coordinates with respect to the tested cylinder. In addition to the location the size of the defects can be determined, for example by evaluating the number of pixels that make up the detected defect. In general, the optical recording of a lighted through image and the subsequent data evaluation is known in the art. Any suitable camera system and lighting system can be used. The amount of light and resolution of the camera system should be chosen so that the required resolution to detect defects in the coating layer is achieved. This includes ensuring that the layer to measured is in focus, while ensuring that the other side of the cylinder is not in focus. In general, any suitable light through method can be used. The light used can be of any suitable type, including diffuse light and telecentric light, either polarized or unpolarized. On the receiving side of the measurement setup filters like polarizing filter can be used, with or without combination with polarizing on the light source. The cylinder can be rotated to make multiple images encompassing the entire out circumference of the cylinder. The multiple images can be combined into a single image for further evaluation using suitable methods known in the art.

One example of a though light measurement setup is provided with a light source made up of a daylight color source, providing a diffuse light source. The cylinder to be tested is positioned close to the diffuse light, at a distance of for example 1-5 cm. The camera is positioned opposite of the light source so that an image of the lighted area facing the camera can be recorded. Type of lighting, positioning, etc. In one particular example of a suitable setup, the coated cylinder to be examined is placed around 30 cm from the light source. According to the invention, any other suitable optical inspection method can be used that can determine optical defects in the silicone layer, where the size and/or shape and/or location of the defects can be detected, recorded and evaluated.

With a through light method as described above, the coated surface can be scanned, covering the full circumference of the cylinder. This can be done by taking multiple images around the circumference of the cylinder and combining them to form a single image or apply known image manipulation techniques to the multiple images of the circumference of the cylinder to achieve a reliable defect recognition and thereby ensure that no defect is detected twice or split, which is the case through means that rotate the cylinder with a precise angle and additionally known software-related solutions which determine the location of the defect.. Any defects in the coating will be recognizable in the image, in particular having a different color and/or brightness. The defects can be detected in the image by known image manipulation techniques. In combination with the camera system properties, like focal length and sensor pixel size, the actual size of the defects can be determined. Using this method, defects of very small size can be detected, for example down to 10 µm. The size of the defect can be calculated for example by the surface area of the defect, or by taking a diameter of the defect. This could be the diameter in case of essentially round defects, or for example the longest length fitting into the defect shape in case of irregular and/or elongated defects.

Having localized all defects, the statistical distribution of the number of defects and the size distribution can be calculated using known methods. The distribution can for example be calculated along the axial axis of the cylinder.

In addition, the surface area of the defects can be determined. According to the invention, the applied inner coating can be defined to be optically defect free if the surface area defects form a maximum 5% of the surface area of the cylindrical inner coated surface, preferably 3% of the cylindrical inner surface, more preferably 2% of the cylindrical inner surface, most preferably on 1% of the cylindrical inner surface or less. With these percentages, the defects are not detectable with the naked eye, for example with the optical test described above. Optically defect free relates to the defects described above, such as droplets and/or haze and/or cloudy structure and/or similar.

According to the invention, the applied inner coating can be defined to be optically defect free if individual defect areas in the coating layer are smaller than 0.013 square millimeter, preferably smaller than 0.00832 square millimeter, more preferably smaller than 0.00782 square millimeter, in particular smaller than 0.000729 square millimeter.

According to the invention, the applied inner coating can be defined to be optically defect free if the defects have a diameter smaller than 125 µm, preferably smaller than 100 µm, preferably smaller than 50 µm, in particular smaller than 30 µm. Here the diameter is useful if the defects are essentially round. For defects that are not essentially round, the diameter can be taken as the longest lengths that fits within the area of the defect. With these diameter sizes, the defects are not detectable with the naked eye, for example with the optical test described above.

## Claims

1. Method for coating the inside of a glass cylinder comprising the steps of
providing a glass cylinder,
inserting a spray nozzle into the glass cylinder,
praying a silicone solution on the inside of the glass cylinder while moving the nozzle along the longitudinal axis of the cylinder.

2. Method according to claim 1, further comprising cleaning the inside of the glass cylinder before spaying the silicone solution.

3. Method according to any of the preceding claims, comprising mixing the silicone solution to be sprayed contains between 1-5% silicone, preferably between 2.5-3.5% silicone, and in particular 2.8% silicone.

4. Method according to any of the preceding claims, wherein the silicone is PDMS.

5. Method according to any of the preceding claims, wherein the spray nozzle is arranged to provide a cone shaped spray pattern.

6. Method according to any of the preceding claims, wherein the speed of the nozzle is kept constant between a start position and an end position during spraying, and wherein the constant speed is within the range of be tween 85 mm/s and 300 mm/s.

7. Method according to any of the preceding claims, further comprising dry ing the silicone applied to the inside of the cylinder.

8. Method according to any of the preceding claims, further comprising steri lization of the coated cylinder after the coating has been applied.

9. Method according to any of the preceding claims, further comprising providing the glass cylinder in an upright position, inserting the nozzle in side the cylinder up to a start position, applying the silicone solution while moving the nozzle in the downward direction up to an end position.

10. Method according to any of the preceding claims, further comprising de positing a layer thickness of the silicone layer between 40 and 80 nm.

11. Glass container comprising an inner surface with an optically defect free silicone layer in the layer thickness of between 40 and 80 nm.

12. Glass container according to claim 11, wherein the optically defect free is defined as defects smaller than 100 µm, preferably smaller than 50 µm, in particular smaller than 20 µm.
